# EUROPEAN PATENT APPLICATION

(11) **EP 4 787 947 A1**
(43) Date of publication of application: **05.08.2026**
(21) Application number: 23953818.4
(22) Date of filing: 28.09.2023
(51) Int. Cl.: H04W 28/02

(54) **INFORMATION PROCESSING METHODS AND APPARATUS**

(71) Applicant: Beijing Xiaomi Mobile Software Co., Ltd., Beijing 100085 (CN)
(72) Inventor: LI, Yanhua, Beijing 100085 (CN); JIANG, Xiaowei, Beijing 100085 (CN)
(74) Representative: Gunzelmann, Rainer
(86) International application number: PCT/CN2023/122986
(87) International publication number: WO 2025/065674

(57) **Abstract**

Disclosed in the embodiments of the present disclosure are information processing methods and an apparatus. A method comprises: determining that first data is present in a logic channel (LCH) or a logic channel group (LCG), the first data comprising at least one data packet or a data packet set, and the remaining time corresponding to the first data being less than a first threshold; and sending a delay state report (DSR) to a network device, the DSR comprising the amount of the first data. Therefore, the present disclosure can timely transmit and schedule data having relatively less remaining time in the logic channel so as to complete emergency scheduling, thus effectively reducing the packet loss rate, improving the communication efficiency of the system, and reasonably scheduling uplink resources.

## Description

### TECHNICAL FIELD

The present disclosure relates to the field of communication technologies, and in particular relates to an information processing method, and an information processing apparatus.

### BACKGROUND

In extended reality (XR) services, data typically consists of multiple quality of service (QoS) flows, resulting in a very large volume of traffic. However, the scheduling of a network is dynamic. Therefore, in some cases, even if some data streams belong to low-priority logical channels, if some data packets have not been scheduled for a long time, a buffer status report (BSR) needs to be sent to notify the network as soon as possible.

### SUMMARY

Embodiments of the present disclosure provide an information processing method, and an information processing apparatus.

Embodiments of a first aspect of the present disclosure provide an information processing method, which includes: determining that first data exists in a logical channel (LCH) or a logical channel group (LCG), where the first data includes at least one data packet or data packet set, and a remaining time corresponding to the first data is less than a first threshold; and sending a delay status report (DSR) to a network device, where the DSR includes a size of the first data.

It is determined that first data exists in an LCH or an LCG, where the first data includes at least one data packet or data packet set, and a remaining time corresponding to the first data is less than a first threshold; and a DSR is sent to a network device, where the DSR includes a size of the first data.

Embodiments of a second aspect of the present disclosure provide an information processing method, which includes: receiving a DSR sent by a terminal, where the DSR is sent upon determining, by the terminal, that first data exists in an LCH or an LCG, the first data includes at least one data packet or data packet set, a remaining time corresponding to the first data is less than a first threshold, and the DSR includes a size of the first data.

Embodiments of a third aspect of the present disclosure provide an information processing method, which includes: determining, by a terminal, that first data exists in an LCH or an LCG, where the first data includes at least one data packet or data packet set, and a remaining time corresponding to the first data is less than a first threshold; and sending, by the terminal, a DSR to a network device, where the DSR includes a size of the first data.

Embodiments of a fourth aspect of the present disclosure provide a terminal, which includes: a processing module configured to determine that first data exists in an LCH or an LCG, where the first data includes at least one data packet or data packet set, and a remaining time corresponding to the first data is less than a first threshold; and a transceiver module configured to send a DSR to a network device, where the DSR includes a size of the first data.

Embodiments of a fifth aspect of the present disclosure provide a network device, which includes a transceiver module configured to receive a DSR sent by a terminal, where the DSR is sent upon determining, by the terminal, that first data exists in an LCH or an LCG, the first data includes at least one data packet or data packet set, a remaining time corresponding to the first data is less than a first threshold, and the DSR includes a size of the first data.

In the solution proposed in the embodiments of the present disclosure, by determining that first data exists in an LCH or an LCG, where the first data includes at least one data packet or data packet set, and a remaining time corresponding to the first data is less than a first threshold; and sending a DSR to a network device, where the DSR includes a size of the first data, it is possible to timely transmit data with less remaining time in a scheduling logical channel, complete emergency scheduling, effectively reduce a packet loss rate, improve the communication efficiency of a system, and rationally schedule uplink resources.

### BRIEF DESCRIPTION OF THE DRAWINGS

In order to more clearly illustrate the technical solutions in the embodiments of the present disclosure or the background, the drawings to be used in the embodiments of the present disclosure or the background are illustrated below.
FIG. 1 is a schematic diagram of the architecture of a communication system provided according to an embodiment of the present disclosure.
FIGS. 2A to 2B are schematic interactive diagrams of information processing methods provided according to an embodiment of the present disclosure, respectively.
FIGS. 3A to 3C are schematic flowcharts of information processing methods provided according to an embodiment of the present disclosure, respectively.
FIGS. 4A to 4C are schematic flowcharts of information processing methods provided according to an embodiment of the present disclosure, respectively.
FIG. 5 is a schematic flowchart of an information processing method provided according to an embodiment of the present disclosure, respectively.
FIG. 6A is a schematic block diagram of a terminal provided according to an embodiment of the present disclosure.
FIG. 6B is a schematic block diagram of a network device provided according to an embodiment of the present disclosure.
FIG. 7A is a schematic block diagram of a communication device provided according to an embodiment of the present disclosure.
FIG. 7B is a schematic block diagram of a chip provided according to an embodiment of the present disclosure.

### DETAILED DESCRIPTION

Embodiments of the present disclosure provide an information processing method, and an information processing apparatus.

In a first aspect, embodiments of the present disclosure provide an information processing method, which includes: determining that first data exists in a logical channel (LCH) or a logical channel group (LCG), where the first data includes at least one data packet or data packet set, and a remaining time corresponding to the first data is less than a first threshold; and sending a delay status report (DSR) to a network device, where the DSR includes a size of the first data.

In the above embodiments, it is possible to timely transmit data with less remaining time in a scheduling logical channel, complete emergency scheduling, effectively reduce a packet loss rate, improve the communication efficiency of a system, and rationally schedule uplink resources.

In conjunction with some embodiments of the first aspect, in some embodiments, sending the DSR to the network device includes: sending the DSR to the network device via a buffer status report (BSR) media access control-control element (MAC CE).

In conjunction with some embodiments of the first aspect, in some embodiments, sending the DSR to the network device includes: sending the DSR to the network device via a DSR MAC CE.

In conjunction with some embodiments of the first aspect, in some embodiments, sending the DSR to the network device via the DSR MAC CE includes: determining that an uplink grant resource exists for transmitting the DSR MAC CE, and transmitting the DSR MAC CE with the uplink grant resource.

In conjunction with some embodiments of the first aspect, in some embodiments, sending the DSR to the network device via the DSR MAC CE includes: determining that no uplink grant resource exists for transmitting the DSR MAC CE, and sending a scheduling request (SR) to the network device based on first configuration information.

In conjunction with some embodiments of the first aspect, in some embodiments, the SR is used to request the network device to configure a resource for the DSR MAC CE, and the first configuration information is used to configure the SR corresponding to the DSR MAC CE.

In conjunction with some embodiments of the first aspect, in some embodiments, the method further includes: determining that an uplink grant resource exists for transmitting the first data, and cancelling the sending of the DSR.

In conjunction with some embodiments of the first aspect, in some embodiments, the method further includes: determining that an uplink grant resource exists for transmitting data to be transmitted in the LCH or the LCG, and cancelling the sending of the DSR.

In conjunction with some embodiments of the first aspect, in some embodiments, the method further includes: determining that an uplink grant resource exists for transmitting the DSR MAC CE, and cancelling the sending of the DSR.

In conjunction with some embodiments of the first aspect, in some embodiments, the method further includes: determining that the uplink grant resource exists for transmitting the DSR MAC CE, an uplink grant resource exists for transmitting the first data, or an uplink grant resource exists for transmitting data to be transmitted in the LCH or the LCG, and cancelling the sending of the SR.

In conjunction with some embodiments of the first aspect, in some embodiments, the SR triggers a random access channel (RACH) procedure, and the method further includes: determining that the uplink grant resource exists for transmitting the DSR MAC CE, an uplink grant resource exists for transmitting the first data, or an uplink grant resource exists for transmitting data to be transmitted in the LCH or the LCG, and cancelling the RACH procedure triggered by the SR.

In a second aspect, embodiments of the present disclosure provide an information processing method, which includes: receiving a DSR sent by a terminal, where the DSR is sent upon determining, by the terminal, that first data exists in an LCH or an LCG, the first data includes at least one data packet or data packet set, a remaining time corresponding to the first data is less than a first threshold, and the DSR includes a size of the first data.

In the above embodiments, it is possible to timely transmit data with less remaining time in a scheduling logical channel, complete emergency scheduling, effectively reduce a packet loss rate, improve the communication efficiency of a system, and rationally schedule uplink resources.

In conjunction with some embodiments of the second aspect, in some embodiments, receiving the DSR sent by the terminal includes: receiving the DSR sent by the terminal via a BSR MAC CE.

In conjunction with some embodiments of the second aspect, in some embodiments, receiving the DSR sent by the terminal includes: receiving the DSR sent by the terminal via a DSR MAC CE.

In conjunction with some embodiments of the second aspect, in some embodiments, receiving the DSR sent by the terminal via the DSR MAC CE includes: receiving the DSR MAC CE sent by the terminal with an uplink grant resource, where the uplink grant resource is used to transmit the DSR MAC CE.

In conjunction with some embodiments of the second aspect, in some embodiments, receiving the DSR sent by the terminal via the DSR MAC CE includes: receiving an SR sent by the terminal, where the SR is sent by the terminal based on first configuration information upon determining that no uplink grant resource exists for transmitting the DSR MAC CE.

In conjunction with some embodiments of the second aspect, in some embodiments, the SR is used to request the network device to configure a resource for the DSR MAC CE, and the first configuration information is used to configure the SR corresponding to the DSR MAC CE.

In a third aspect, embodiments of the present disclosure provide an information processing method, which includes: determining, by a terminal, that first data exists in an LCH or an LCG, where the first data includes at least one data packet or data packet set, and a remaining time corresponding to the first data is less than a first threshold; and sending, by the terminal, a DSR to a network device, where the DSR includes a size of the first data.

In the above embodiments, it is possible to timely transmit data with less remaining time in a scheduling logical channel, complete emergency scheduling, effectively reduce a packet loss rate, improve the communication efficiency of a system, and rationally schedule uplink resources.

In conjunction with some embodiments of the third aspect, in some embodiments, sending the DSR to the network device includes: sending the DSR to the network device via a BSR MAC CE.

In conjunction with some embodiments of the third aspect, in some embodiments, sending the DSR to the network device includes: sending the DSR to the network device via a DSR MAC CE.

In conjunction with some embodiments of the third aspect, in some embodiments, sending the DSR to the network device via the DSR MAC CE includes: determining that an uplink grant resource exists for transmitting the DSR MAC CE, and transmitting the DSR MAC CE with the uplink grant resource.

In conjunction with some embodiments of the third aspect, in some embodiments, sending the DSR to the network device via the DSR MAC CE includes: determining that no uplink grant resource exists for transmitting the DSR MAC CE, and sending an SR to the network device based on first configuration information.

In conjunction with some embodiments of the third aspect, in some embodiments, the SR is used to request the network device to configure a resource for the DSR MAC CE, and the first configuration information is used to configure the SR corresponding to the DSR MAC CE.

In conjunction with some embodiments of the third aspect, in some embodiments, the method further includes: determining that an uplink grant resource exists for transmitting the first data, and cancelling the sending of the DSR.

In conjunction with some embodiments of the third aspect, in some embodiments, the method further includes: determining that an uplink grant resource exists for transmitting data to be transmitted in the LCH or the LCG, and cancelling the sending of the DSR.

In conjunction with some embodiments of the third aspect, in some embodiments, the method further includes: determining that an uplink grant resource exists for transmitting the DSR MAC CE, and cancelling the sending of the DSR.

In conjunction with some embodiments of the third aspect, in some embodiments, the method further includes: determining that the uplink grant resource exists for transmitting the DSR MAC CE, an uplink grant resource exists for transmitting the first data, or an uplink grant resource exists for transmitting data to be transmitted in the LCH or the LCG, and cancelling the sending of the SR.

In conjunction with some embodiments of the third aspect, in some embodiments, the SR triggers an RACH procedure, and the method further includes: determining that the uplink grant resource exists for transmitting the DSR MAC CE, an uplink grant resource exists for transmitting the first data, or an uplink grant resource exists for transmitting data to be transmitted in the LCH or the LCG, and cancelling the RACH procedure triggered by the SR.

In a fourth aspect, embodiments of the present disclosure provide a terminal, which includes a transceiver module and a processing module, where the terminal is configured to perform the first aspect and an optional implementation of the first aspect.

In a fifth aspect, embodiments of the present disclosure provide a network device, which includes a transceiver module and a processing module, where the network device is configured to perform the second aspect and an optional implementation of the second aspect.

In a sixth aspect, embodiments of the present disclosure provide a terminal, which includes one or more processors, where the terminal is configured to perform the first aspect and an optional implementation of the first aspect.

In a seventh aspect, embodiments of the present disclosure provide a network device, which includes one or more processors, where the network device is configured to perform the second aspect and an optional implementation of the second aspect.

In an eighth aspect, embodiments of the present disclosure provide a communication system, which includes a terminal configured to perform the methods described in the first aspect and an optional implementation of the first aspect, and a network device configured to perform the methods described in the second aspect and an optional implementation of the second aspect.

In a ninth aspect, embodiments of the present disclosure provide a storage medium, which has stored therein instructions that, when run on a communication device, cause the communication device to perform the methods described in the first aspect and an optional implementation of the first aspect or the methods described in the second aspect and an optional implementation of the second aspect.

In a tenth aspect, embodiments of the present disclosure provide a program product that, when executed by a communication device, causes the communication device to perform the methods described in the first aspect and an optional implementation of the first aspect or the methods described in the second aspect and an optional implementation of the second aspect.

In an eleventh aspect, embodiments of the present disclosure provide a computer program that, when run on a computer, causes the computer to perform the methods described in the first aspect and an optional implementation of the first aspect or the methods described in the second aspect and an optional implementation of the second aspect.

In a twelfth aspect, embodiments of the present disclosure provide a chip or chip system. The chip or chip system includes a processing circuitry configured to perform the methods described in the first aspect and an optional implementation of the first aspect or the methods described in the second aspect and an optional implementation of the second aspect.

It may be understood that the terminal, the network device, the communication system, the storage medium, the program product, the computer program, and the chip or chip system which are mentioned above are all configured to execute the methods provided in the embodiments of the present disclosure. Therefore, regarding the beneficial effects they may achieve, reference may be made to the beneficial effects of the corresponding methods, which will not be repeated here.

Embodiments of the present disclosure provide an information processing method, and an information processing apparatus. In some embodiments, terms such as an information processing method, an information handling method, and a communication method may be used interchangeably; terms such as an information processing device, an information handling device, and a communication device may be used interchangeably; and terms such as an information processing system, and a communication system may be used interchangeably.

The embodiments of the present disclosure are not exhaustive, but are merely illustrative of some embodiments, and are not intended to limit the scope of protection of the present disclosure. Unless there is any contradiction, each step in a particular embodiment may be implemented as an independent embodiment, and the steps may be arbitrarily combined. For example, the solution after removing some steps in a particular embodiment may also be implemented as an independent embodiment, and the order of the steps in a particular embodiment may be arbitrarily interchanged. In addition, optional implementations in a particular embodiment may be arbitrarily combined. Furthermore, the embodiments may be arbitrarily combined. For example, some or all steps in different embodiments may be arbitrarily combined, and a particular embodiment may be arbitrarily combined with optional implementations of other embodiments.

In each embodiment of the present disclosure, unless otherwise specified or contradicted by logic, the terms and/or descriptions between the embodiments are consistent and may be referenced by each other. The technical features in different embodiments may be combined based on their inherent logical relationships to form a new embodiment.

The terms used in the embodiments of the present disclosure are only for the purpose of describing specific embodiments and are not intended to limit the present disclosure.

In the embodiments of the present disclosure, unless otherwise specified, elements expressed in the singular form, such as "a," "an," "the," "above," "said," "above-mentioned," "this," or the like, may mean "one and only one," "one or more," "at least one," or the like. For example, when an article such as "a," "an," and "the" in English in translation is used, the noun following the article may be understood as a singular expression or a plural expression.

In the embodiments of the present disclosure, "a plurality of" refers to two or more.

In some embodiments, terms such as "at least one of," "one or more," "a plurality of," "multiple," and the like may be used interchangeably.

In some embodiments, the descriptions such as "at least one of A or B," "A and/or B," "A in one case, B in another case" or "in response to one case A, in response to another case B" may include the following technical solutions depending on the situations: A is executed in some embodiments (A is executed independently from B); B is executed in some embodiments (B is executed independently from A); A or B is selected for execution in some embodiments (A and B are selectively executed); and A and B are executed in some embodiments (A and B are both executed). The same applies when there are more branches such as A, B, and C.

In some embodiments, the descriptions such as "A or B" may include the following technical solutions depending on the situations: A is executed in some embodiments (A is executed independently from B); B is executed in some embodiments (B is executed independently from A); and A or B is selected for execution in some embodiments (A and B are selectively executed). The same applies when there are more branches such as A, B, and C.

The prefixes such as "first" and "second" in the embodiments of the present disclosure are only used to distinguish different described objects and do not constitute any restrictions on the position, order, priority, quantity or content of the described objects. For the statement of the described objects, reference is made to the description in the context of the claims or embodiments, and no unnecessary restrictions should be constituted due to the use of prefixes. For example, if the described object is a "field", the ordinal numbers preceding the "fields" in a "first field" and a "second field" do not limit the position or order of the "fields". "First" and "second" do not limit whether the "fields" they modify are in the same message, nor do they limit the order of the "first field" and "second field". For another example, if the described object is "level", then the ordinal numbers preceding the "levels" in a "first level" and a "second level" do not restrict the priority between "levels". For another example, the number of the described objects is not limited by ordinal numbers and may be one or more. Taking a "first device" as an example, the number of "devices" may be one or more. In addition, the objects modified by different prefixes may be the same or different. For example, if the described object is a "device", then the "first device" and the "second device" may be the same device or different devices, and the types of the "first device" and the "second device" may be the same or different; for another example, if the described object is "information", then "first information" and "second information" may be the same information or different information, and the contents of the "first information" and the "second information" may be the same or different.

In some embodiments, "including A," "comprising A," "indicating A," and "carrying A" may be interpreted as directly carrying A or indirectly indicating A.

In some embodiments, terms such as "in response to...," "in response to determining...," "in the case of...," "at the time of...," "when...," "if...," "in a case where...," and the like may be used interchangeably.

In some embodiments, terms such as "greater than," "greater than or equal to," "not less than," "more than," "more than or equal to," "not smaller than," "higher than," "higher than or equal to," "not lower than," and "above" may be used interchangeably; and terms such as "less than," "less than or equal to," "not greater than," "smaller than," "smaller than or equal to," "not more than," "lower than," "lower than or equal to," "not higher than," and "below" may be used interchangeably.

In some embodiments, apparatuses and devices may be interpreted as being physical or virtual, and their names are not limited to the names described in the embodiments. In some cases, apparatuses and devices may also be understood as "equipments," "devices," "circuits," "network elements," "nodes," "functions," "units," "sections," "systems," "networks," "chips," "chip systems," "entities," and "bodies".

In some embodiments, the "network" may be interpreted as devices included in the network, e.g., an access network device, a core network device, or the like.

In some embodiments, the "access network device (AN device)" may also be referred to as "a radio access network device (RAN device)," "a base station (BS)," "a radio base station," or "a fixed station". In some embodiments, the "access network device (AN device)" may also be understood as "a node," "an access point," "a transmission point (TP)," "a reception point (RP)," "a transmission/reception point (TRP)," "a panel," "an antenna panel," "an antenna array," "a cell," "a macro cell," "a small cell," "a femto cell," "a pico cell," "a sector," "a cell group," "a serving cell," "a carrier," "a component carrier," "a bandwidth part (BWP)", or the like.

In some embodiments, the "terminal" or "terminal device" may be referred to as a user equipment (UE), a user terminal, a mobile station (MS), a mobile terminal (MT), a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or the like.

In some embodiments, obtaining data, information, and the like may comply with the laws and regulations of the country where the data, information, and the like are obtained.

In some embodiments, data, information, and the like may be obtained with the consent of the user.

In addition, each element, each row, or each column in the table in the embodiments of the present disclosure may be implemented as an independent embodiment, and the combination of any elements, any rows, and any columns may also be implemented as an independent embodiment.

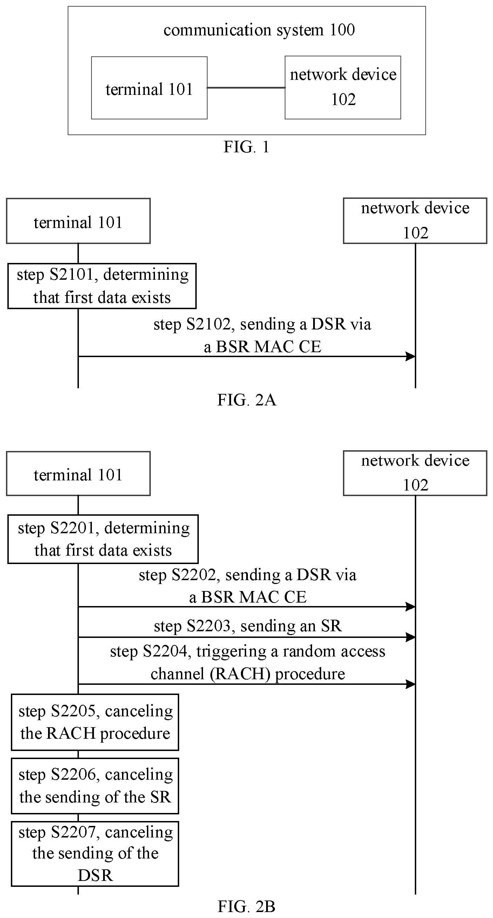

FIG. 1 is a schematic diagram illustrating the architecture of a communication system according to an embodiment of the present disclosure.

As shown in FIG. 1, the communication system 100 may include a terminal 101 and a network device 102.

In some embodiments, for example, the terminal 101 includes, but is not limited to, at least one of: a mobile phone, a wearable device, an Internet of Things device, a car with a communication function, a smart car, a tablet computer (Pad), a computer with a wireless transceiver function, a virtual reality (VR) terminal, an augmented reality (AR) terminal, a wireless terminal in industrial control, a wireless terminal in self-driving, a wireless terminal in a remote medical surgery, a wireless terminal in smart grid, a wireless terminal in transportation safety, a wireless terminal in a smart city, a wireless terminal in a smart home, or a reduced capability (RedCap) terminal.

In some embodiments, the network device 102 is, for example, a node or device that connects the terminal to a wireless network. The network device may include, but is not limited to, at least one of: a node in an information processing network, an evolved Node B (eNB), a next generation eNB (ng-eNB), a next generation Node B (gNB), a node B (NB), a home node B (HNB), a home evolved node B (HeNB), a wireless backhaul device, a radio network controller (RNC), a base station controller (BSC), a base transceiver station (BTS), a base band unit (BBU), or a mobile switching center in a 5G communication system; a base station, an open radio access network (Open RAN), or a cloud RAN (Cloud RAN) in a 6G communication system; base stations in other communication systems; or an access node in a wireless fidelity (Wi-Fi) system.

In some embodiments, the technical solutions in the present disclosure may be applied to the Open RAN architecture. In this case, the interfaces between or within access network devices involved in the embodiments of the present disclosure may be transformed into internal interfaces of the Open RAN architecture. The processes and information interactions between these internal interfaces may be implemented by software or programs.

In some embodiments, the network device may be composed of a centralized unit (CU) and a distributed unit (DU), in which the CU may also be referred to as a control unit. The CU-DU structure may be used to split the protocol layers of the access network device, and the functions of some protocol layers are placed in the CU for centralized control, and the functions of some or all of the remaining protocol layers are distributed in the DU, and the DU is centrally controlled by the CU.

It may be understood that the communication system described in the embodiments of the present disclosure is for the purpose of more clearly illustrating the technical solution in the embodiments of the present disclosure, but does not constitute a limitation on the technical solution provided in the embodiments of the present disclosure. Those of ordinary skill in the art may know that with the evolution of the system architecture and the emergence of new service scenarios, the technical solution provided in the embodiments of the present disclosure is also applicable to similar technical problems.

The following embodiments of the present disclosure may be applied to the communication system 100 shown in FIG. 1, or to some entities thereof, but are not limited thereto.

The entities shown in FIG. 1 are illustrative. The communication system 100 may include all or some of the entities in FIG. 1, or the communication system may include other entities outside in FIG. 1. The number and form of individual entities are arbitrary. The entities may be physical or virtual. The connection relationship between the entities is illustrative. The entities may not be connected to each other, or may be connected to each other in any way. The connection may be direct or indirect, and may be wired or wireless.

The embodiments of the present disclosure may be applied to information processing systems, Long Term Evolution (LTE) systems, LTE-Advanced (LTE-A) systems, LTE-Beyond (LTE-B) systems, SUPER 3G systems, International Mobile Telecommunications-Advanced (IMT-Advanced) systems, 4G mobile communication systems, 5G mobile communication systems, 5G new radio (NR) systems, Future Radio Access (FRA) systems, New-Radio Access Technology (RAT) systems, New Radio (NR) systems, New radio access (NX) systems, Future generation radio access (FX) systems, Global System for Mobile communications (GSM), CDMA2000, Ultra Mobile Broadband (UMB) systems, IEEE 802.11 (Wi-Fi), IEEE 802.16 (WiMAX), IEEE 802.20, Ultra-Wideband (UWB), Bluetooth (a registered trademark), PLMN networks, D2D systems, Machine-to-Machine (M2M) systems, IoT systems, V2X systems, systems utilizing other communication methods, next-generation systems built upon them, and the like. In addition, multiple systems may also be combined (for example, a combination of 5G and LTE or LTE-A, or the like) for application.

In XR services, data typically consists of multiple QoS flows, resulting in a very large volume of traffic. XR service streams need to meet certain latency requirements during the transmission, especially since some data streams need to arrive at a server simultaneously for decoding. A delay in any one of the data streams will cause the joint decoding of multiple data streams to fail. However, the scheduling of a network is dynamic. Therefore, in some cases, even if some data streams belong to low-priority logical channels, if some data packets have not been scheduled for a long time, a BSR needs to be sent to notify the network as soon as possible. However, according to the existing mechanism, the BSR may only be sent when data from a high-priority logical channel arrives, which cannot meet the needs of emergency scheduling. Therefore, optimizations need to be considered for emergency scheduling scenarios in XR services.

In some embodiments, the reporting of a delay status report (DSR) is introduced. The basic idea is as follows: the terminal may report the DSR, which carries information about the delay. For example, if uplink data cannot be scheduled for a long time, the remaining time for the data packet will be less than a certain threshold.

The remaining time for a data packet is the time remaining until the packet is discarded, which is determined by a discard timer of a packet data convergence protocol (PDCP).

However, the mechanism for DSR reporting is still unclear.

The information processing method and the information processing apparatus provided in the present disclosure will be described in detail below with reference to the accompanying drawings.

FIG. 2A is a schematic interactive diagram illustrating an information processing method according to an embodiment of the present disclosure. As shown in FIG. 2A, embodiments of the present disclosure relate to an information processing method, which includes the following steps.

At step S2101, the terminal 101 determines that first data exists.

In some embodiments, the terminal 101 determines that first data exists in an LCH or an LCG.

In some embodiments, the remaining time corresponding to the above-mentioned first data is less than a first threshold.

In some embodiments, the above-mentioned first data includes at least one data packet or data packet set.

Optionally, the above-mentioned data packet may be a protocol data unit (PDU), and the above-mentioned data packet set may be a PDU set.

In some embodiments, the above-mentioned remaining time corresponding to the first data refers to the time remaining until at least one data packet or data packet set included in the above-mentioned first data is discarded.

In some embodiments, the above-mentioned remaining time corresponding to the first data may be determined based on a discard timer of a PDCP.

In some embodiments, the above-mentioned first threshold may be predetermined by a protocol, configured by the network via a signaling, or agreed upon by the network and the terminal in advance, which will not be limited in these embodiments.

In some embodiments, the name of the above-mentioned first threshold is not limited, and may be, for example, a remaining time threshold or a remainder time threshold.

In some embodiments, the name of the above-mentioned first data is not limited, and may be, for example, first characteristic data, data to be discarded, urgent data, or the like.

In some embodiments, if the terminal 101 determines that the first data exists, it may trigger a DSR.

In some embodiments, the size of the data volume of the above-mentioned first data is carried in the above-mentioned DSR.

At step S2102, the terminal 101 sends the DSR to the network device 102 via a BSR MAC CE.

In some embodiments, the network device 102 receives the above-mentioned DSR.

In some embodiments, the terminal 101 sends the above-mentioned DSR via a BSR MAC CE.

In some embodiments, the above-mentioned DSR includes the size of the data volume of the above-mentioned first data.

In some embodiments, the above-mentioned DSR is sent as a special type of regular BSR.

In some embodiments, the MAC PDU may contain at most one BSR MAC CE.

In some embodiments, multiple events trigger a BSR, and regular BSRs and periodic BSRs should take precedence over padding BSRs.

In some embodiments, the above-mentioned DSR takes precedence over regular BSRs and periodic BSRs.

In some embodiments, a BSR retransmission timer may not be started after the DSR is sent.

In some embodiments, the names of information and the like are not limited to the names described in the embodiments. Terms such as "information," "message," "signal," "signaling," "report," "configuration," "indication," "instruction," "command," "channel," "parameter," "domain," "field," "symbol," "code element," "codebook," "codeword," "codepoint," "bit," "data," "program," and "chip" may be used interchangeably.

In some embodiments, the names of information and the like are not limited to the names described in the embodiments. Terms such as "information," "message," "signal," "signaling," "report," "configuration," "indication," "instruction," "command," "channel," "parameter," "domain," "field," "symbol," "code element," "codebook," "codeword," "codepoint," "bit," "data," "program," and "chip" may be used interchangeably.

In some embodiments, terms such as "physical downlink shared channel (PDSCH)" and "downlink (DL) data" may be used interchangeably, and terms such as "physical uplink shared channel (PUSCH)" and "uplink (UL) data" may be used interchangeably.

In some embodiments, terms such as "radio", "wireless", "radio access network (RAN)", "access network (AN)", and "RAN-based" may be used interchangeably.

In some embodiments, terms such as "resource block (RB)", "physical resource block (PRB)", "sub-carrier group (SCG)", "resource element group (REG)", "PRB pair", "RB pair", "resource element (RE)", and "sub-carrier" may be used interchangeably.

In some embodiments, "acquiring," "obtaining," "getting," "receiving," "transmitting," "bidirectional transmission," and "sending and/or receiving" may be used interchangeably, and may be interpreted as receiving from other entities, obtaining from protocols, obtaining from higher layers, obtaining by self-processing, autonomously implementing, or other meanings.

In some embodiments, terms such as "sending," "emitting," "reporting," "issuing," "transmitting," "bidirectional transmission," and "sending and/or receiving" may be used interchangeably.

In some embodiments, terms such as "certain," "preset," "predetermined," "set," "indicated," "particular," "any," and "first" may be used interchangeably. "A certain A," "a preset A," "a predetermined A," "a set A," "an indicated A," "a particular A," "any A," and "a first A" may be interpreted as A predefined in a protocol or the like, or as A obtained by setting, configuration, indication or the like, or as a specific A, a certain A, any A, a first A or the like, but are not limited thereto.

In some embodiments, determining or judging may be performed by a value represented by 1 bit (0 or 1), or by a true or false value (boolean), or by a comparison of numerical values (e.g., a comparison with a predetermined value), but is not limited thereto.

The communication method involved in the embodiments of the present disclosure may include at least one of steps S2101 to S2102. For example, step 2101 may be implemented as an independent embodiment, step 2102 may be implemented as an independent embodiment, and steps 2101 + 2102 may be implemented as an independent embodiment, but the communication method is not limited thereto.

In some embodiments, reference may be made to other optional implementations described before or after the specification corresponding to FIG. 2A.

FIG. 2B is a schematic interactive diagram illustrating an information processing method according to an embodiment of the present disclosure. As shown in FIG. 2B, embodiments of the present disclosure relate to an information processing method, which includes the following steps.

At step S2201, the terminal 101 determines that first data exists.

In some embodiments, the terminal 101 determines that first data exists in an LCH or an LCG.

In some embodiments, the remaining time corresponding to the above-mentioned first data is less than a first threshold.

In some embodiments, the above-mentioned first data includes at least one data packet or data packet set.

Optionally, the above-mentioned data packet may be a protocol data unit (PDU), and the above-mentioned data packet set may be a PDU set.

In some embodiments, the above-mentioned remaining time corresponding to the first data refers to the time remaining until at least one data packet or data packet set included in the above-mentioned first data is discarded.

In some embodiments, the above-mentioned remaining time corresponding to the first data may be determined based on a discard timer of a PDCP.

In some embodiments, the above-mentioned first threshold may be predetermined by a protocol, configured by the network via a signaling, or agreed upon by the network and the terminal in advance, which will not be limited in these embodiments.

In some embodiments, the name of the above-mentioned first threshold is not limited, and may be, for example, a remaining time threshold or a remainder time threshold.

In some embodiments, the name of the above-mentioned first data is not limited, and may be, for example, first characteristic data, data to be discarded, urgent data, or the like.

In some embodiments, if the terminal 101 determines that the first data exists, it may trigger a DSR.

In some embodiments, the size of the data volume of the above-mentioned first data is carried in the above-mentioned DSR.

At step S2202, the terminal 101 sends the DSR to the network device 102 via a DSR MAC CE.

In some embodiments, the network device 102 receives the above-mentioned DSR.

In some embodiments, the terminal 101 sends the above-mentioned DSR via a DSR MAC CE.

In some embodiments, the above-mentioned DSR includes the size of the data volume of the above-mentioned first data.

In some embodiments, the terminal 101 determines that an uplink grant(s) resource exists for transmitting the above-mentioned DSR MAC CE, and the terminal 101 sends the above-mentioned DSR MAC CE on the above-mentioned uplink grant resource.

In some embodiments, the MAC PDU may contain both a BSR MAC CE and a DSR MAC CE.

In some embodiments, both the BSR and the DSR are triggered simultaneously.

In some embodiments, the data volume of the first data that triggers the DSR may be less than the data volume of the data that triggers the BSR.

In some embodiments, the remaining time corresponding to the first data that triggers the DSR may be less than the remaining time corresponding to the data that triggers the BSR.

At step S2203, the terminal 101 sends a scheduling request (SR) to the network device 102.

In some embodiments, the terminal 101 determines that no uplink grant resource exists for transmitting the above-mentioned DSR MAC CE, and the terminal 101 may trigger the sending of an SR to the network device 102.

In some embodiments, the terminal 101 determines that although there are uplink grant resources, the sending of the above-mentioned DSR MAC CE fails because the logical channel multiplexing rules are not met, and the terminal 101 may trigger the sending of an SR to the network device 102.

In some embodiments, the above-mentioned SR is used to request the network device 102 to configure resources for the above-mentioned DSR MAC CE (i.e., request resources that may be used to transmit the above-mentioned DSR MAC CE).

In some embodiments, the terminal 101 may send an SR to the network device 102 based on first configuration information.

In some embodiments, the above-mentioned first configuration information may be sent by the network device 102 to the terminal 101.

In some embodiments, the above-mentioned first configuration information is an SR resource configuration corresponding to a logical channel configuration that triggers the BSR, that is, the existing SR configuration corresponding to the BSR is multiplexed.

In some embodiments, the above-mentioned first configuration information is an SR configuration specifically used to send the above-mentioned DSR MAC CE.

In some embodiments, the above-mentioned first configuration information may include one or more SR configurations in a bandwidth part (BWP).

In some embodiments, the above-mentioned first configuration information includes multiple SR configurations in a BWP, and the above-mentioned first configuration information may further include the association between the multiple SR configurations and the LCG or LCH that triggers the DSR. For example, when multiple LCHs trigger the DSR simultaneously, it may be specified how to select an SR configuration corresponding to an LCH. For example, the SR configuration corresponding to an LCH with a smaller logical channel priority value may be selected.

In some embodiments, the above-mentioned first configuration information may be included in a radio resources control (RRC) signaling.

In some embodiments, the name of the above-mentioned first configuration information is not limited, and may be, for example, a logical channel configuration (LogicalChannelConfig), a scheduling request configuration, a logical channel scheduling request configuration, or the like.

At step S2204, the terminal 101 triggers a random access channel (RACH) procedure.

In some embodiments, the RACH procedure is triggered because no valid physical uplink control channel (PUCCH) resource exists when the above-mentioned SR is sent.

At step S2205, the terminal 101 cancels the above-mentioned RACH procedure that is triggered.

In some embodiments, the terminal 101 determines that an uplink grant resource exists for transmitting the above-mentioned DSR MAC CE, and cancels the above-mentioned RACH procedure triggered by the above-mentioned SR.

In some embodiments, the terminal 101 determines that an uplink grant resource exists for transmitting the above-mentioned first data, and cancels the above-mentioned RACH procedure triggered by the above-mentioned SR.

In some embodiments, the terminal 101 determines that an uplink grant resource exists for transmitting data to be transmitted in the LCH or LCG, and cancels the above-mentioned RACH procedure triggered by the above-mentioned SR.

At step S2206, the terminal 101 cancels the sending of the above-mentioned SR.

In some embodiments, the terminal 101 determines that an uplink grant resource exists for transmitting the above-mentioned DSR MAC CE, and cancels the sending of the above-mentioned SR.

In some embodiments, the terminal 101 determines that an uplink grant resource exists for transmitting the above-mentioned first data, and cancels the sending of the above-mentioned SR.

In some embodiments, the terminal 101 determines that an uplink grant resource exists for transmitting data to be transmitted in the above-mentioned LCH or LCG, and cancels the sending of the above-mentioned SR.

At step S2207, the terminal 101 cancels the sending of the above-mentioned DSR.

In some embodiments, the terminal 101 determines that an uplink grant resource exists for transmitting the above-mentioned first data, and cancels the sending of the above-mentioned DSR.

As an example, if the terminal 101 reports that there are 1000 bits of data to be sent in the BSR, and the terminal 101 also reports that there are 100 bits of data to be sent in the DSR, that is, the size of the data volume of the first data is 100 bits, in case that the network device 102 is configured with uplink grant resources that may schedule 100 bits of data, then the sending of the DSR may be cancelled. Optionally, the sending of the above-mentioned BSR may not be cancelled.

In some embodiments, the terminal 101 determines that an uplink grant resource exists for transmitting data to be transmitted in the above-mentioned LCH or LCG, and cancels the sending of the above-mentioned DSR.

As an example, if the network device 102 is configured with uplink grant resources capable of holding all data to be transmitted in the above-mentioned LCH or LCG, then the sending of the above-mentioned DSR may be cancelled. Optionally, if a relevant timer, such as a retransmission timer, a periodic transmission timer, or a prohibit timer, is started during the sending process of the above-mentioned DSR, then the timer is stopped.

In some embodiments, the terminal 101 determines that an uplink grant resource exists for transmitting the above-mentioned DSR MAC CE, and cancels the sending of the above-mentioned DSR.

In some embodiments, when the network device 102 indicates to the terminal 101 that the data to be transmitted may be scheduled or when the terminal 101 detects that uplink grant resources are available, the triggered DSR may be cancelled.

In some embodiments, the cancellation of the DSR will result in the cancellation of the pending SR and the RACH procedure.

In some embodiments, when the DSR that triggers the SR has been cancelled, the pending SR triggered due to the above-mentioned DSR is cancelled.

In some embodiments, the ProhibitTimer corresponding to the SR mentioned above is running, and the above-mentioned ProhibitTimer is stopped.

In some embodiments, if the DSR corresponding to the SR that triggers the RACH procedure has been cancelled, the MAC entity may stop the ongoing random access procedure due to the cancellation of the above-mentioned pending SR triggered by the DSR.

In some embodiments, the names of information and the like are not limited to the names described in the embodiments. Terms such as "information," "message," "signal," "signaling," "report," "configuration," "indication," "instruction," "command," "channel," "parameter," "domain," "field," "symbol," "code element," "codebook," "codeword," "codepoint," "bit," "data," "program," and "chip" may be used interchangeably.

In some embodiments, the names of information and the like are not limited to the names described in the embodiments. Terms such as "information," "message," "signal," "signaling," "report," "configuration," "indication," "instruction," "command," "channel," "parameter," "domain," "field," "symbol," "code element," "codebook," "codeword," "codepoint," "bit," "data," "program," and "chip" may be used interchangeably.

In some embodiments, terms such as "physical downlink shared channel (PDSCH)" and "DL data" may be used interchangeably, and terms such as "physical uplink shared channel (PUSCH)" and "UL data" may be used interchangeably.

In some embodiments, terms such as "radio", "wireless", "radio access network (RAN)", "access network (AN)", and "RAN-based" may be used interchangeably.

In some embodiments, terms such as "resource block (RB)", "physical resource block (PRB)", "sub-carrier group (SCG)", "resource element group (REG)", "PRB pair", "RB pair", "resource element (RE)", and "sub-carrier" may be used interchangeably.

In some embodiments, "acquiring," "obtaining," "getting," "receiving," "transmitting," "bidirectional transmission," and "sending and/or receiving" may be used interchangeably, and may be interpreted as receiving from other entities, obtaining from protocols, obtaining from higher layers, obtaining by self-processing, autonomously implementing, or other meanings.

In some embodiments, terms such as "sending," "emitting," "reporting," "issuing," "transmitting," "bidirectional transmission," and "sending and/or receiving" may be used interchangeably.

In some embodiments, terms such as "certain," "preset," "predetermined," "set," "indicated," "particular," "any," and "first" may be used interchangeably. "A certain A," "a preset A," "a predetermined A," "a set A," "an indicated A," "a particular A," "any A," and "a first A" may be interpreted as A predefined in a protocol or the like, or as A obtained by setting, configuration, indication or the like, or as a specific A, a certain A, any A, a first A or the like, but are not limited thereto.

In some embodiments, determining or judging may be performed by a value represented by 1 bit (0 or 1), or by a true or false value (boolean), or by a comparison of numerical values (e.g., a comparison with a predetermined value), but is not limited thereto.

The communication method involved in the embodiments of the present disclosure may include at least one of steps S2201 to S2207. For example, step 2201 may be implemented as an independent embodiment, step 2202 may be implemented as an independent embodiment, steps 2201+2202 may be implemented as an independent embodiment, steps 2201+2202+2207 may be implemented as an independent embodiment, steps 2201+2202+2203 may be implemented as an independent embodiment, step 2202 may be implemented as an independent embodiment, steps 2201+2202+2203+2207 may be implemented as an independent embodiment, steps 2201+2202+2203+2206+2207 may be implemented as an independent embodiment, steps 2201+2202+2203+2204 may be implemented as an independent embodiment, steps 2201+2202+2203+2204+2207 may be implemented as an independent embodiment, steps 2201+2202+2203+2204+2205+2206+2207 may be implemented as an independent embodiment, and so on, but the communication method is not limited thereto.

In some embodiments, step S2203 is optional, and one or more of these steps may be omitted or substituted in different embodiments.

In some embodiments, step S2204 is optional, and one or more of these steps may be omitted or substituted in different embodiments.

In some embodiments, step S2205 is optional, and one or more of these steps may be omitted or substituted in different embodiments.

In some embodiments, step S2206 is optional, and one or more of these steps may be omitted or substituted in different embodiments.

In some embodiments, step S2207 is optional, and one or more of these steps may be omitted or substituted in different embodiments.

In some embodiments, reference may be made to other optional implementations described before or after the specification corresponding to FIG. 2B.

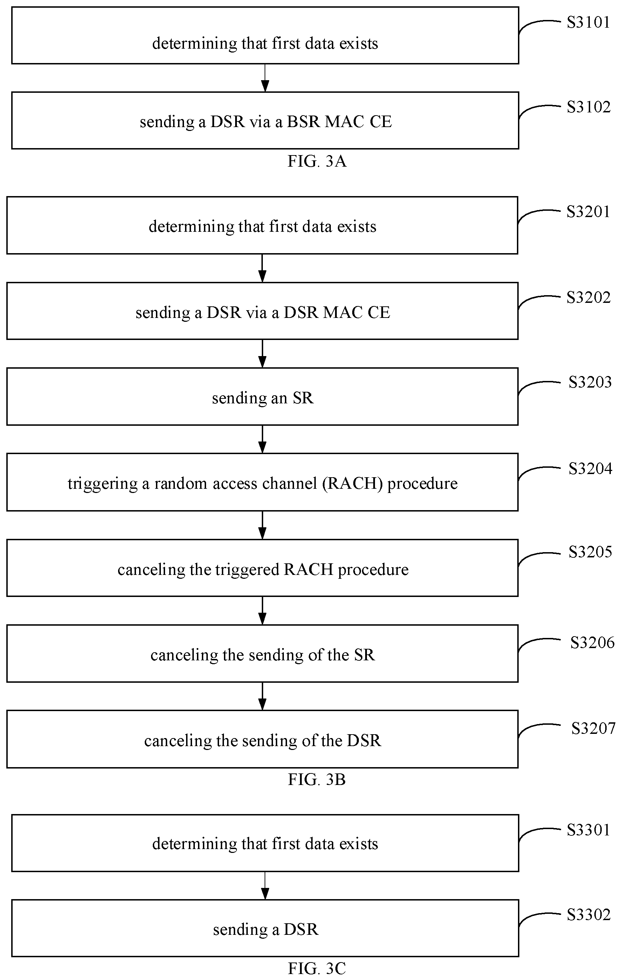

FIG. 3A is a schematic flowchart illustrating an information processing method according to an embodiment of the present disclosure. As shown in FIG. 3A, embodiments of the present disclosure relate to an information processing method, which is performed by the terminal 101 and includes the following steps.

At step S3101, it is determined that first data exists.

Regarding the optional implementation of step S3101, reference may be made to the optional implementation of step S2101 in FIG. 2A and other related parts in the embodiments involved in FIG. 2A, which will not be repeated here.

At step S3102, a DSR is sent via a BSR MAC CE.

Regarding the optional implementation of step S3102, reference may be made to the optional implementation of step S2102 in FIG. 2A and other related parts in the embodiments involved in FIG. 2A, which will not be repeated here.

The communication method involved in the embodiments of the present disclosure may include at least one of steps S3101 to S3102. For example, step 3101 may be implemented as an independent embodiment, step 3102 may be implemented as an independent embodiment, steps 3101+3102 may be implemented as an independent embodiment, and so on, but the communication method is not limited thereto.

FIG. 3B is a schematic flowchart illustrating an information processing method according to an embodiment of the present disclosure. As shown in FIG. 3B, embodiments of the present disclosure relate to an information processing method, which is performed by the terminal 101 and includes the following steps.

At step S3201, it is determined that first data exists.

Regarding the optional implementation of step S3201, reference may be made to the optional implementation of step S2201 in FIG. 2B and other related parts in the embodiments involved in FIG. 2B, which will not be repeated here.

At step S3202, a DSR is sent via a DSR MAC CE.

Regarding the optional implementation of step S3202, reference may be made to the optional implementation of step S2202 in FIG. 2B and other related parts in the embodiments involved in FIG. 2B, which will not be repeated here.

At step S3203, an SR is sent.

Regarding the optional implementation of step S3203, reference may be made to the optional implementation of step S2203 in FIG. 2B and other related parts in the embodiments involved in FIG. 2B, which will not be repeated here.

At step S3204, an RACH procedure is triggered.

Regarding the optional implementation of step S3204, reference may be made to the optional implementation of step S2204 in FIG. 2B and other related parts in the embodiments involved in FIG. 2B, which will not be repeated here.

At step S3205, the triggered RACH procedure mentioned above is cancelled.

Regarding the optional implementation of step S3205, reference may be made to the optional implementation of step S2205 in FIG. 2B and other related parts in the embodiments involved in FIG. 2B, which will not be repeated here.

At step S3206, the sending of the above-mentioned SR is cancelled.

Regarding the optional implementation of step S3206, reference may be made to the optional implementation of step S2206 in FIG. 2B and other related parts in the embodiments involved in FIG. 2B, which will not be repeated here.

At step S3207, the sending of the above-mentioned DSR is cancelled.

Regarding the optional implementation of step S3207, reference may be made to the optional implementation of step S2207 in FIG. 2B and other related parts in the embodiments involved in FIG. 2B, which will not be repeated here.

The communication method involved in the embodiments of the present disclosure may include at least one of steps S3201 to S3207. For example, step 3201 may be implemented as an independent embodiment, step 3202 may be implemented as an independent embodiment, steps 3201+3202 may be implemented as an independent embodiment, steps 3201+3202+3207 may be implemented as an independent embodiment, steps 3201+3202+3203 may be implemented as an independent embodiment, step 3202 may be implemented as an independent embodiment, steps 3201+3202+3203+3207 may be implemented as an independent embodiment, steps 3201+3202+3203+3206+3207 may be implemented as an independent embodiment, steps 3201+3202+3203+3204 may be implemented as an independent embodiment, steps 3201+3202+3203+3204+3207 may be implemented as an independent embodiment, steps 3201+3202+3203+3204+3205+3206+3207 may be implemented as an independent embodiment, and so on, but the communication method is not limited thereto.

In some embodiments, step S3203 is optional, and one or more of these steps may be omitted or substituted in different embodiments.

In some embodiments, step S3204 is optional, and one or more of these steps may be omitted or substituted in different embodiments.

In some embodiments, step S3205 is optional, and one or more of these steps may be omitted or substituted in different embodiments.

In some embodiments, step S3206 is optional, and one or more of these steps may be omitted or substituted in different embodiments.

In some embodiments, step S3207 is optional, and one or more of these steps may be omitted or substituted in different embodiments.

FIG. 3C is a schematic flowchart illustrating an information processing method according to an embodiment of the present disclosure. As shown in FIG. 3C, embodiments of the present disclosure relate to an information processing method, which is performed by the terminal 101 and includes the following steps.

At step S3301, it is determined that first data exists.

Regarding the optional implementation of step S3301, reference may be made to the optional implementations of step S2101 in FIG. 2A, step S2201 in FIG. 2B, step S3101 in FIG. 3A, and step S3201 in FIG. 3B, as well as other related parts in the embodiments involved in FIGS. 2A, 2B, 3A, and 3B, which will not be repeated here.

At step S3302, a DSR is sent.

Regarding the optional implementation of step S3302, reference may be made to the optional implementations of step S2102 in FIG. 2A, step S2202 in FIG. 2B, step S3102 in FIG. 3A, and step S3202 in FIG. 3B, as well as other related parts in the embodiments involved in FIGS. 2A, 2B, 3A, and 3B, which will not be repeated here.

The communication method involved in the embodiments of the present disclosure may include at least one of steps S3301 to S3302. For example, step 3301 may be implemented as an independent embodiment, step 3302 may be implemented as an independent embodiment, steps 3301+3302 may be implemented as an independent embodiment, and so on, but the communication method is not limited thereto.

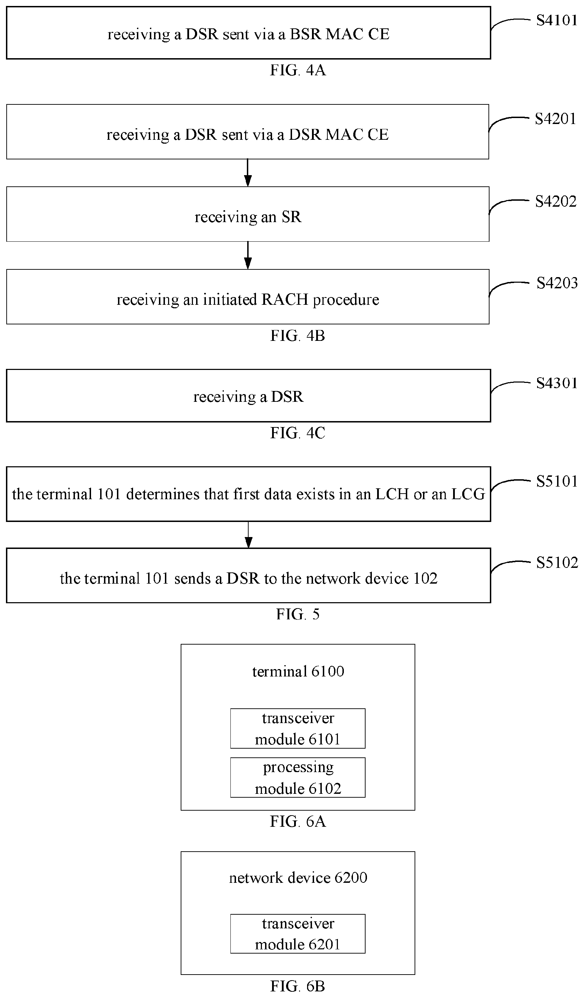

FIG. 4A is a schematic flowchart illustrating an information processing method according to an embodiment of the present disclosure. As shown in FIG. 4A, embodiments of the present disclosure relate to an information processing method, which is performed by the network device 102 and includes the following steps.

At step S4101, a DSR sent via a BSR MAC CE is received.

Regarding the optional implementation of step S4101, reference may be made to the optional implementation of step S2102 in FIG. 2A and other related parts in the embodiments involved in FIG. 2A, which will not be repeated here.

In some embodiments, the above-mentioned DSR is sent upon determining, by the terminal 101, that first data exists. Regarding the optional implementation, reference may be made to the optional implementation of step S2101 in FIG. 2A and other related parts in the embodiments involved in FIG. 2A, which will not be repeated here.

At step S4102, capability information is received.

Regarding the optional implementation of step S4102, reference may be made to the optional implementation of step S2102 in FIG. 2A and other related parts in the embodiments involved in FIG. 2A, which will not be repeated here.

FIG. 4B is a schematic flowchart illustrating an information processing method according to an embodiment of the present disclosure. As shown in FIG. 4B, embodiments of the present disclosure relate to an information processing method, which is performed by the network device 102 and includes the following steps.

At step S4201, a DSR sent via a DSR MAC CE is received.

Regarding the optional implementation of step S4201, reference may be made to the optional implementation of step S2202 in FIG. 2B and other related parts in the embodiments involved in FIG. 2B, which will not be repeated here.

In some embodiments, the above-mentioned DSR is sent upon determining, by the terminal 101, that first data exists. Regarding the optional implementation, reference may be made to the optional implementation of step S2201 in FIG. 2B and other related parts in the embodiments involved in FIG. 2B, which will not be repeated here.

At step S4202, an SR is received.

Regarding the optional implementation of step S4202, reference may be made to the optional implementation of step S2203 in FIG. 2B and other related parts in the embodiments involved in FIG. 2B, which will not be repeated here.

At step S4203, an initiated RACH procedure is received.

Regarding the optional implementation of step S4203, reference may be made to the optional implementation of step S2204 in FIG. 2B and other related parts in the embodiments involved in FIG. 2B, which will not be repeated here.

In some embodiments, the terminal 101 cancels the above-mentioned RACH procedure that is triggered. Regarding the optional implementation, reference may be made to the optional implementation of step S2205 in FIG. 2B and other related parts in the embodiments involved in FIG. 2B, which will not be repeated here.

In some embodiments, the terminal 101 cancels the sending of the above-mentioned SR. Regarding the optional implementation, reference may be made to the optional implementation of step S2206 in FIG. 2B and other related parts in the embodiments involved in FIG. 2B, which will not be repeated here.

In some embodiments, the terminal 101 cancels the sending of the above-mentioned DSR. Regarding the optional implementation, reference may be made to the optional implementation of step S2207 in FIG. 2B and other related parts in the embodiments involved in FIG. 2B, which will not be repeated here.

The communication method involved in the embodiments of the present disclosure may include at least one of steps S4201 to S4203. For example, step 4201 may be implemented as an independent embodiment, steps 4201+4202 may be implemented as an independent embodiment, steps 4201+4202+4203 may be implemented as an independent embodiment, and so on, but the communication method is not limited thereto.

In some embodiments, step S4202 is optional, and one or more of these steps may be omitted or substituted in different embodiments.

In some embodiments, step S4203 is optional, and one or more of these steps may be omitted or substituted in different embodiments.

FIG. 4C is a schematic flowchart illustrating an information processing method according to an embodiment of the present disclosure. As shown in FIG. 4C, embodiments of the present disclosure relate to an information processing method, which is performed by the network device 102 and includes the following steps.

At step S4301, a DSR is received.

Regarding the optional implementation of step S4301, reference may be made to the optional implementations of step S2102 in FIG. 2A, step S2202 in FIG. 2B, step S4101 in FIG. 4A, and step S4201 in FIG. 4B, as well as other related parts in the embodiments involved in FIGS. 2A, 2B, 4A, and 4B, which will not be repeated here.

FIG. 5 is a schematic flowchart illustrating an information processing method according to an embodiment of the present disclosure. As shown in FIG. 5, the method involved in the embodiments of the present disclosure is performed by the communication system 100 and includes the following steps.

At step S5101, the terminal 101 determines that first data exists in an LCH or an LCG.

Regarding the optional implementation of step S5101, reference may be made to any one or more of the embodiments in FIGS. 2A to 2B, 3A to 3C, and 4A to 4C, as well as other related parts in the embodiments involved in FIGS. 2A to 2B, 3A to 3C, and 4A to 4C.

At step S5102, the terminal 101 sends a DSR to the network device 102.

Regarding the optional implementation of step S5102, reference may be made to any one or more of the embodiments in FIGS. 2A to 2B, 3A to 3C, and 4A to 4C, as well as other related parts in the embodiments involved in FIGS. 2A to 2B, 3A to 3C, and 4A to 4C.

In some embodiments, the above-mentioned methods may include the methods described in the embodiments of the above-mentioned communication system side, the above-mentioned terminal side, the above-mentioned network device side, and the like, which will not be repeated here.

In this implementation or embodiment, unless there is contradiction, individual steps may be independent, arbitrarily combined or exchanged in order, optional implementations or optional embodiments may be arbitrarily combined, and may be arbitrarily combined with any steps in other implementations or other embodiments.

The following is an illustrative description of the methods described in the above embodiments.

In some embodiments, all triggered DSRs may be cancelled when the UL grant(s) can accommodate all pending data available for transmission or when the UL grant(s) can accommodate all pending data available for transmission but is not sufficient to additionally accommodate the DSR MAC CE plus its subheader. All triggered DSRs may be cancelled when the UL grant(s) can accommodate all pending data available for DSR reporting (i.e., the above-mentioned first data) or when the UL grant(s) can accommodate all pending data available for DSR reporting but is not sufficient to additionally accommodate the DSR MAC CE plus its subheader. All DSRs triggered prior to an MAC PDU assembly shall be cancelled when an MAC PDU is transmitted and this PDU includes a DSR MAC CE which contains buffer status up to the last event that triggers a DSR prior to the MAC PDU assembly.

In some embodiments, all pending SR(s) for a DSR triggered according to the DSR procedure shall be cancelled and each respective *SR-ProhibitTimer* shall be stopped when the MAC PDU is transmitted and this PDU includes a DSR MAC CE which contains buffer status up to the last event that triggers a DSR prior to the MAC PDU assembly. All pending SR(s) for a DSR triggered according to the DSR procedure shall be cancelled and each respective *SR-ProhibitTimer* shall be stopped when the UL grant(s) can accommodate all pending data available for transmission or when the UL grant(s) can accommodate all pending data available for DSR reporting (i.e., the above-mentioned first data). All pending SR(s) for a DSR triggered according to the DSR procedure shall be cancelled and each respective *SR-ProhibitTimer* shall be stopped when the the BSR that triggers the SR has already been cancelled.

In some embodiments, the MAC entity may stop the ongoing random access procedure (if any) due to a pending SR for a DSR triggered, which has, for example, no PUCCH resources, if at least one of the following cases exists: if an MAC PDU is transmitted using a UL grant other than a UL grant provided by a random access response or a UL grant determined as specified in clause 5.1.2a for the transmission of the MSGA payload, and this PDU includes a DSR MAC CE which contains buffer status up to (and including) the last event that triggers a DSR prior to the MAC PDU assembly; or if the UL grant(s) can accommodate all pending data available for transmission; or if the UL grant(s) can accommodate all pending data available for DSR reporting (i.e., the above-mentioned first data); or if the DSR that triggers the SR corresponding to the random access procedure has already been cancelled.

The embodiments of the present disclosure further provide a device for implementing any one of the above methods. For example, a device is provided, which includes units or modules for implementing steps performed by the terminal in any one of the above methods. For another example, another device is provided, which includes units or modules for implementing steps performed by a network device (such as an access network device, a core network functional node, a core network device, or the like) in any one of the above methods.

It should be understood that the division of the units or modules in the above device is only a logical functional division. In actual implementation, the units or modules may be fully or partially integrated into a physical entity, or may be physically separated. Furthermore, the units or modules in the device may be implemented in the form of calling software by a processor, for example, the device includes a processor, the processor is connected to a memory, the memory has stored therein instructions, and the processor calls the instructions stored in the memory to implement any one of the above methods or to implement the functions of the units or modules of the above device. The processor is, for example, a general-purpose processor, such as a central processing unit (CPU) or a microprocessor, and the memory is either internal to the device or external to the device. Alternatively, the units or modules in the device may be implemented in the form of hardware circuits. The functions of some or all of the units or modules may be achieved by designing the hardware circuits. The above-mentioned hardware circuits may be understood as one or more processors. For example, in an implementation, the above-mentioned hardware circuit is an application-specific integrated circuit (ASIC). The functions of some or all of the above-mentioned units or modules are achieved by designing the logical relationships between the components within the circuit. As another example, in another implementation, the above-mentioned hardware circuit may be implemented by a programmable logic device (PLD). Taking a field programmable gate array (FPGA) as an example, it may include a large number of logic gates. The connection relationships between the logic gates are configured via configuration files, thereby achieving the functions of some or all of the above-mentioned units or modules. All units or modules of the above device may be implemented entirely in the form of calling software by the processor, or entirely by hardware circuits, or partially in the form of calling software by the processor and the rest by hardware circuits.

In the embodiments of the present disclosure, the processor is a circuit with signal processing functions. In an implementation, the processor may be a circuit with instruction reading and running functions, such as a CPU, a microprocessor, a graphics processing unit (GPU) (which may be understood as a microprocessor), or a digital signal processor (DSP). In another implementation, the processor may implement certain functions by means of the logical relationship of hardware circuits. The logical relationship of the above-mentioned hardware circuits is fixed or reconfigurable. For example, the processor is a hardware circuit implemented by an ASIC or a PLD, such as an FPGA. In a reconfigurable hardware circuit, the process of loading, by the processor, a configuration document to implement the hardware circuit configuration may be understood as the process of loading, by the processor, instructions to implement the functions of some or all of the above units or modules. In addition, the processor is may also be a hardware circuit designed for artificial intelligence, which may be understood as ASIC, such as a neural network processing unit (NPU), a tensor processing unit (TPU), a deep learning processing unit (DPU), or the like.

FIG. 6A is a schematic block diagram of a terminal provided in an embodiment of the present disclosure. As shown in FIG. 6A, the terminal 6100 may include at least one of a transceiver module 6101, a processing module 6102, or the like. In some embodiments, the above-mentioned processing module is configured to determine that first data exists in an LCH or an LCG, where the first data includes at least one data packet or data packet set, and a remaining time corresponding to the first data is less than a first threshold; and the above-mentioned transceiver module is configured to send a DSR to a network device, where the DSR includes a size of the first data.

Optionally, the above-mentioned transceiver module is configured to perform at least one of the communication steps such as sending and/or receiving steps performed by the terminal 101 in any of the above methods, which will not be elaborated here.

Optionally, the above-mentioned processing module is configured to perform at least one of the other steps performed by the terminal 101 in any of the above methods, which will not be elaborated here.

FIG. 6B is a schematic block diagram of a network device provided in an embodiment of the present disclosure. As shown in FIG. 6B, the network device 6200 may include a transceiver module 6201. In some embodiments, the above-mentioned transceiver module is configured to receive a DSR sent by a terminal, where the DSR is sent upon determining, by the terminal, that first data exists in an LCH or an LCG, the first data includes at least one data packet or data packet set, a remaining time corresponding to the first data is less than a first threshold, and the DSR includes a size of the first data.

Optionally, the above-mentioned transceiver module is configured to perform at least one of the communication steps such as sending and/or receiving steps performed by the terminal 101 in any of the above methods, which will not be elaborated here.

In some embodiments, the transceiver module may include a sending module and/or a receiving module, and the sending module and the receiving module may be separate or integrated together. Alternatively, the transceiver module may be interchanged with the transceiver.

In some embodiments, the processing module may be a single module or may include multiple sub-modules. Optionally, the above-mentioned sub-modules may each execute all or some of the steps to be performed by the processing module. Alternatively, the processing module may be interchanged with the processor.

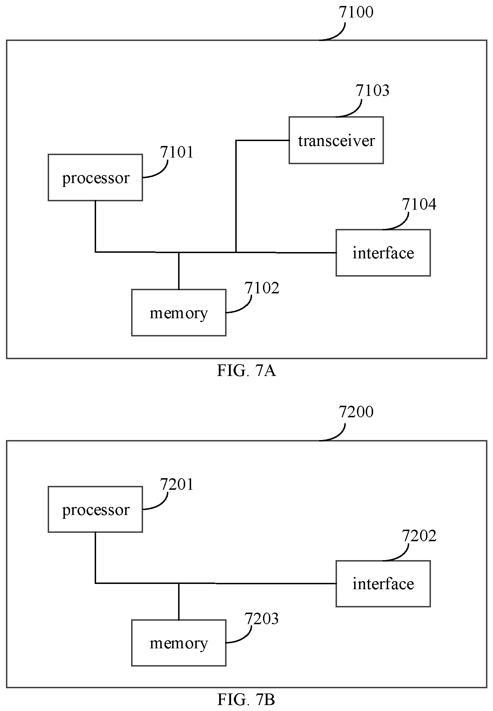

FIG. 7A is a schematic block diagram of a communication device 7100 provided in an embodiment of the present disclosure. The communication device 7100 may be a network device (such as an access network device, a core network device, or the like), a terminal (such as a user equipment, or the like), a chip, chip system, or processor that supports a network device to implement any one of the above methods, or a chip, chip system, or processor that supports a terminal to implement any one of the above methods. The communication device 7100 may be configured to implement the methods as described in the above-mentioned method embodiments. For details, reference may be made to the description in the above-mentioned method embodiments.

As shown in FIG. 7A, the communication device 7100 includes one or more processors 7101. The processor 7101 may be a general-purpose processor, a special-purpose processor, or the like. The processor 7101 may be, for example, a baseband processor or a central processor. The baseband processor may be configured to process a communication protocol and communication data, and the central processor may be configured to control a communication device (such as a base station, a baseband chip, a terminal, a terminal chip, a distributed unit (DU), a centralized unit (CU), or the like), execute a program, and process data of the program. The communication device 7100 is configured to execute any one of the above methods.

In some embodiments, the communication device 7100 further includes one or more memories 7102 for storing instructions. Alternatively, all or some of the memories 7102 may be located outside the communication device 7100.

In some embodiments, the communication device 7100 further includes one or more transceivers 7103. When the communication device 7100 includes one or more transceivers 7103, at least one of the communication steps such as sending and/or receiving steps in the above methods is performed by the transceiver 7103, and at least one of the other steps is performed by the processor 7101.

In some embodiments, the transceiver may include a receiver and/or a transmitter, and the receiver and the transmitter may be separate or integrated. Optionally, terms such as transceiver, transceiver unit, transceiver device, and transceiver circuit may be used interchangeably; terms such as transmitter, transmitter unit, transmitter device, and transmitter circuit may be used interchangeably; and terms such as receiver, receiver unit, receiver device, and receiver circuit may be used interchangeably.

In some embodiments, the communication device 7100 may include one or more interface circuits 7104. Optionally, the interface circuits 7104 are connected to the memory 7102. The interface circuits 7104 may be configured to receive signals from the memory 7102 or other devices, and may be configured to send signals to the memory 7102 or other devices. For example, the interface circuits 7104 may read instructions stored in the memory 7102 and send the instructions to the processor 7101.

The communication device 7100 described in the above embodiments may be a network device or a terminal, but the scope of the communication device 7100 described in the present disclosure is not limited thereto, and the structure of the communication device 7100 may not be limited to FIG. 7A. The communication device 7100 may be an independent device or part of a larger device. For example, the communication device 7100 may be (1) a stand-alone integrated circuit (IC), or a chip, or a chip system or subsystem; (2) a set of one or more ICs, in which optionally, the set of ICs may further include a storage component for storing data and programs; (3) an ASIC, such as a modem; (4) a module that may be embedded in other devices; (5) a receiver, a terminal, an intelligent terminal, a cellular phone, a wireless device, a handheld device, a mobile unit, an in-vehicle device, a network device, a cloud device, an artificial intelligence device, or the like; or (6) others.

FIG. 7B is a schematic block diagram of a chip 7200 provided in an embodiment of the present disclosure. For the case where the communication device 7100 may be a chip or a chip system, reference may be made to the block diagram of the chip 7200 shown in FIG. 7B, but the present disclosure is not limited thereto.

The chip 7200 includes one or more processors 7201, and the chip 7200 is configured to perform any one of the above methods.

In some embodiments, the chip 7200 further includes one or more interface circuits 7202. Optionally, the interface circuits 7202 are connected to the memory 7203. The interface circuits 7202 may be configured to receive signals from the memory 7203 or other devices, and may be configured to send signals to the memory 7203 or other devices. For example, the interface circuits 7202 may read instructions stored in the memory 7203 and send the instructions to the processor 7201.

In some embodiments, at least one of the communication steps such as sending and/or receiving steps (for example, but not limited to, steps S2101, S2102 and S2103) in the above methods is performed by the interface circuits 7202, and at least one of the other steps is performed by the processor 7201.

In some embodiments, terms such as interface circuit, interface, transceiver pin, and transceiver may be used interchangeably.

In some embodiments, the chip 7200 further includes one or more memories 7203 for storing instructions. Alternatively, all or some of the memories 7203 may be located outside the chip 7200.

The present disclosure further provides a storage medium, which has stored therein instructions that, when executed on the communication device 7100, cause the communication device 7100 to perform any one of the above methods. Optionally, the above-mentioned storage medium is an electronic storage medium. Optionally, the above-mentioned storage medium is a computer-readable storage medium, but is not limited thereto; and the above-mentioned storage medium may also be a storage medium readable by other devices. Optionally, the above storage medium may be a non-transitory storage medium, but is not limited thereto; and the above-mentioned storage medium may also be a transitory storage medium.

The present disclosure further provides a program product that, when executed by the communication device 7100, causes the communication device 7100 to perform any one of the above methods. Optionally, the above-mentioned program product is a computer program product.

The present disclosure further provides a computer program that, when executed on a computer, causes the computer to perform functions of any one of the above-mentioned method embodiments.

All or some of the above embodiments may be implemented by software, hardware, firmware or any combination thereof. When implemented using the software, all or some of the above embodiments may be implemented in the form of the computer program product. The computer program product includes one or more computer programs. When the computer program is loaded and executed on the computer, all or some of the processes or functions according to embodiments of the present disclosure will be generated. The computer may be a general-purpose computer, a special-purpose computer, a computer network, or other programmable devices. The computer program may be stored in a computer-readable storage medium, or transmitted from one computer-readable storage medium to another computer-readable storage medium. For example, the computer program may be transmitted from one website, computer, server or data center to another website, computer, server or data center in a wired manner (such as via a coaxial cable, an optical fiber, a digital subscriber line DSL) or a wireless manner (for example, in an infrared, wireless, or microwave manner, or the like). The computer-readable storage medium may be any available medium that may be accessed by the computer, or a data storage device such as a server or a data center integrated by one or more available media. The available medium may be a magnetic medium (for example, a floppy disk, a hard disk, or a magnetic tape), an optical medium (for example, a high-density digital video disc DVD), a semiconductor medium (for example, a solid state disk SSD), or the like.

Those of ordinary skill in the art will appreciate that the units and algorithm steps of each example described in conjunction with the embodiments of the present disclosure may be implemented in electronic hardware, or a combination of computer software and electronic hardware. Whether these functions are performed in hardware or software depends on the specific application and design constraints of the technical solution. Professional technicians may use different methods to implement the described functions for each specific application, but such an implementation should not be understood as extending beyond the scope of the present disclosure.

Those skilled in the art may clearly understand that, for the convenience and brevity of description, regarding the specific working processes of the systems, devices and units described above, reference may be made to the corresponding processes in the above-mentioned method embodiments, which will not be repeated here.

The above are only specific embodiments of the present disclosure, but the protection scope of the present disclosure is not limited thereto. Any person skilled in the art who is familiar with this technical field may easily think of changes or substitutions within the technical scope defined in the present disclosure, which should be included in the protection scope of the present disclosure. Therefore, the protection scope of the present disclosure should be based on the protection scope of the claims.

## Claims

1. An information processing method, performed by a terminal, the method comprising:
determining that first data exists in a logical channel (LCH) or a logical channel group (LCG), wherein the first data comprises at least one data packet or data packet set, and a remaining time corresponding to the first data is less than a first threshold; and
sending a delay status report (DSR) to a network device, wherein the DSR comprises a size of the first data.

2. The method according to claim 1, wherein sending the DSR to the network device comprises:
sending the DSR to the network device via a buffer status report (BSR) media access control-control element (MAC CE).

3. The method according to claim 1, wherein sending the DSR to the network device comprises:
sending the DSR to the network device via a DSR MAC CE.

4. The method according to claim 3, wherein sending the DSR to the network device via the DSR MAC CE comprises:
determining that an uplink grant resource exists for transmitting the DSR MAC CE, and transmitting the DSR MAC CE with the uplink grant resource.

5. The method according to claim 4, wherein sending the DSR to the network device via the DSR MAC CE comprises:
determining that no uplink grant resource exists for transmitting the DSR MAC CE, and sending a scheduling request (SR) to the network device based on first configuration information.

6. The method according to claim 5, wherein the SR is used to request the network device to configure a resource for the DSR MAC CE, and the first configuration information is used to configure the SR corresponding to the DSR MAC CE.

7. The method according to any one of claims 3 to 5, further comprising:
determining that an uplink grant resource exists for transmitting the first data, and cancelling the sending of the DSR.

8. The method according to any one of claims 3 to 5, further comprising:
determining that an uplink grant resource exists for transmitting data to be transmitted in the LCH or the LCG, and cancelling the sending of the DSR.

9. The method according to any one of claims 3 to 5, further comprising:
determining that an uplink grant resource exists for transmitting the DSR MAC CE, and cancelling the sending of the DSR.

10. The method according to claim 5, further comprising:
determining that the uplink grant resource exists for transmitting the DSR MAC CE, an uplink grant resource exists for transmitting the first data, or an uplink grant resource exists for transmitting data to be transmitted in the LCH or the LCG, and cancelling the sending of the SR.

11. The method according to claim 5, wherein the SR triggers a random access channel (RACH) procedure, and the method further comprises:
determining that the uplink grant resource exists for transmitting the DSR MAC CE, an uplink grant resource exists for transmitting the first data, or an uplink grant resource exists for transmitting data to be transmitted in the LCH or the LCG, and cancelling the RACH procedure triggered by the SR.

12. An information processing method, performed by a network device, the method comprising:
receiving a delay status report (DSR) sent by a terminal,
wherein the DSR is sent upon determining, by the terminal, that first data exists in a logical channel (LCH) or a logical channel group (LCG), the first data comprises at least one data packet or data packet set, a remaining time corresponding to the first data is less than a first threshold, and the DSR comprises a size of the first data.

13. The method according to claim 12, wherein receiving the DSR sent by the terminal comprises:
receiving the DSR sent by the terminal via a buffer status report (BSR) media access control-control element (MAC CE).

14. The method according to claim 12, wherein receiving the DSR sent by the terminal comprises:
receiving the DSR sent by the terminal via a DSR MAC CE.

15. The method according to claim 14, wherein receiving the DSR sent by the terminal via the DSR MAC CE comprises:
receiving the DSR MAC CE sent by the terminal with an uplink grant resource, wherein the uplink grant resource is used to transmit the DSR MAC CE.

16. The method according to claim 15, wherein receiving the DSR sent by the terminal via the DSR MAC CE comprises:
receiving a scheduling request (SR) sent by the terminal, wherein the SR is sent by the terminal based on first configuration information upon determining that no uplink grant resource exists for transmitting the DSR MAC CE.

17. The method according to claim 16, wherein the SR is used to request the network device to configure a resource for the DSR MAC CE, and the first configuration information is used to configure the SR corresponding to the DSR MAC CE.

18. An information processing method, comprising:
determining, by a terminal, that first data exists in a logical channel (LCH) or a logical channel group (LCG), wherein the first data comprises at least one data packet or data packet set, and a remaining time corresponding to the first data is less than a first threshold; and
sending, by the terminal, a delay status report (DSR) to a network device, wherein the DSR comprises a size of the first data.

19. A terminal, comprising:
a processing module configured to determine that first data exists in a logical channel (LCH) or a logical channel group (LCG), wherein the first data comprises at least one data packet or data packet set, and a remaining time corresponding to the first data is less than a first threshold; and
a transceiver module configured to send a delay status report (DSR) to a network device, wherein the DSR comprises a size of the first data.

20. A network device, comprising:
a transceiver module configured to receive a delay status report (DSR) sent by a terminal,
wherein the DSR is sent upon determining, by the terminal, that first data exists in a logical channel (LCH) or a logical channel group (LCG), the first data comprises at least one data packet or data packet set, a remaining time corresponding to the first data is less than a first threshold, and the DSR comprises a size of the first data.

21. A communication device, wherein the terminal comprises:
one or more processors,
wherein the one or more processors are configured to perform the information processing method according to any one of claims 1 to 11.

22. A communication device, wherein the network device comprises:
one or more processors,
wherein the one or more processors are configured to perform the information processing method according to any one of claims 12 to 17.

23. A communication system, comprising:
a terminal configured to perform the positioning measurement method according to any one of claims 1 to 11; and
a network device configured to perform the information processing method according to any one of claims 12 to 17.

24. A storage medium having stored therein instructions that, when run on a communication device, cause the communication device to perform the information processing method according to any one of claims 1 to 11 or any one of claims 12 to 17.
